# EUROPEAN PATENT APPLICATION

(11) **EP 4 415 214 A2**
(43) Date of publication of application: **14.08.2024**
(21) Application number: 24156409.5
(22) Date of filing: 07.02.2024
(51) Int. Cl.: H02J 7/00

(54) **AIRCRAFT BATTERY CHARGING SYSTEM AND METHOD**

(30) Priority: 07.02.2023 US 202363443879 P
(71) Applicant: PRATT & WHITNEY CANADA CORP., Longueuil, Québec J4G 1A1 (CA)
(72) Inventor: LAM, Simon, (01BE5) Longueuil, J4G 1A1 (CA); ROBACHE, Remi, (01BE5) Longueuil, J4G 1A1 (CA); SHENOUDA, Antwan, (01BE5) Longueuil, J4G 1A1 (CA); FREER, Richard, (01BE5) Longueuil, J4G 1A1 (CA); GARIEPY, Raphael, (01BE5) Longueuil, J4G 1A1 (CA)
(74) Representative: Dehns

(57) **Abstract**

An assembly for an aircraft includes a battery (70), a charger (94), and a battery monitoring system (72). The battery (70) includes a plurality of battery strings (80). The charger (94) is configured to charge the plurality of battery strings (80). The battery monitoring system (72) further includes a processor (100) in communication with a non-transitory memory (102) storing instructions, which instructions when executed by the processor (100), cause the processor (100) to determine the battery string voltage for each battery string of the plurality of battery strings (80) and identify a battery string voltage hierarchy for the plurality of battery strings (80), the battery string voltage hierarchy identifying at least a lowest-voltage battery string (S2) of the plurality of battery strings (80), at least one intermediate-voltage battery string (S3-S5) of the plurality of battery strings (80), and a highest-voltage battery string (S1) of the plurality of battery strings (80), and sequentially charge the plurality of battery strings (80) with the charger (94) based on the battery string voltage hierarchy.

## Description

### TECHNICAL FIELD

This disclosure relates generally to aircraft batteries and, more particularly, to systems and methods for charging an aircraft battery including a plurality of battery strings electrically connected in parallel.

### BACKGROUND OF THE ART

Aircraft may include one or more batteries for supplying electrical power to electrical loads of the aircraft or its propulsion system(s). These batteries may be periodically charged to ensure that sufficient electrical power is available for the aircraft's operational requirements. Various systems and methods for charging aircraft batteries are known in the art. While these known systems and methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, an assembly for an aircraft includes a battery, a charger, and a battery monitoring system. The battery includes a plurality of battery strings. The charger is configured to selectively direct an electrical charging current to the battery to charge the plurality of battery strings. The battery monitoring system includes a plurality of sensors. Each sensor is configured to measure a battery string voltage of a respective one of the plurality of battery strings. The battery monitoring system further includes a processor in communication with a non-transitory memory storing instructions, which instructions when executed by the processor, cause the processor to determine the battery string voltage for each battery string of the plurality of battery strings with the plurality of sensors and identify a battery string voltage hierarchy for the plurality of battery strings, the battery string voltage hierarchy identifying at least a lowest-voltage battery string of the plurality of battery strings, at least one intermediate-voltage battery string of the plurality of battery strings, and a highest-voltage battery string of the plurality of battery strings, and sequentially charge the plurality of battery strings with the charger based on the battery string voltage hierarchy by charging the lowest-voltage battery string to a first target string voltage and charging the lowest-voltage battery string and the at least one intermediate-voltage battery string together to a second target string voltage, the second target string voltage greater than the first target string voltage.

In any of the aspects or embodiments described above and herein, the first target string voltage may be greater than the battery string voltage of the intermediate-voltage battery string and the first target string voltage may be within a first voltage tolerance of the battery string voltage of the intermediate-voltage battery string.

In any of the aspects or embodiments described above and herein, the second target string voltage may be greater than the battery string voltage of the highest-voltage battery string and the second target string voltage may be within a second voltage tolerance of the battery string voltage of the highest-voltage battery string.

In any of the aspects or embodiments described above and herein, the instructions, when executed by the processor, may further cause the processor to charge the lowest-voltage battery string, the intermediate-voltage battery string, and the highest-voltage battery string together to a final target string voltage, subsequent to charging the lowest-voltage battery string and the at least one intermediate-voltage battery string together to the second target string voltage, the final target string voltage greater than the second target string voltage.

In any of the aspects or embodiments described above and herein, the at least one intermediate-voltage battery string may include a plurality of intermediate-voltage battery strings.

In any of the aspects or embodiments described above and herein, the second target string voltage may be greater than or equal to the battery string voltage of one intermediate-voltage battery string of the plurality of intermediate voltage battery strings.

In any of the aspects or embodiments described above and herein, charging the lowest-voltage battery string to the first target string voltage may include charging only the lowest-voltage battery string to the first target string voltage and charging the lowest-voltage battery string and the at least one intermediate-voltage battery string to the second target string voltage may include charging only the lowest-voltage battery string and the at least one intermediate-voltage battery string to the second target string voltage.

In any of the aspects or embodiments described above and herein, the instructions, when executed by the processor, may further cause the processor to charge the lowest-voltage battery string to the first target string voltage at a charging current value of the electrical charging current and charge two or more of the plurality of battery strings at the charging current value multiplied by a number of the two or more of the plurality of battery strings being charged.

In any of the aspects or embodiments described above and herein, the plurality of battery strings may be electrically connected in parallel.

In any of the aspects or embodiments described above and herein, the assembly may further include an aircraft propulsion system gas turbine engine. The aircraft propulsion system gas turbine engine may include a generator forming the charger.

According to another aspect of the present disclosure, a method for charging a charging a battery for an aircraft is provided. The battery includes a plurality of battery strings electrically connected in parallel. The method includes determining a battery string voltage for each battery string of the plurality of battery strings, identifying a battery string voltage hierarchy for the plurality of battery strings, the battery string voltage hierarchy ordered from a lowest battery string voltage to a highest battery string voltage, and sequentially charging the plurality of battery strings based on the battery string voltage hierarchy by charging a first battery string of the plurality of battery strings to a first target string voltage, charging the first battery string and a second battery string of the plurality of the plurality of battery strings together to a second target string voltage, the second target string voltage greater than the first target string voltage, and charging the plurality of battery strings together to a final target string voltage, the final target string voltage greater than the second target string voltage.

In any of the aspects or embodiments described above and herein, the first target string voltage may be within a first voltage tolerance of the battery string voltage of the second battery string.

In any of the aspects or embodiments described above and herein, the second target string voltage may be within a second voltage tolerance of the battery string voltage of a third battery string of the plurality of battery strings.

In any of the aspects or embodiments described above and herein, the third battery string may be immediately after the second battery string in the battery string voltage hierarchy.

In any of the aspects or embodiments described above and herein, the method may further include opening contactors for each battery string of the plurality of battery strings prior to charging the first battery string to the first target string voltage.

According to another aspect of the present disclosure, an assembly for an aircraft includes an aircraft propulsion system, a battery, a charger, and a battery monitoring system. The aircraft propulsion system includes a rotational assembly. The rotational assembly includes a rotatable shaft and an electric motor. The electric motor is configured to selectively drive the rotatable shaft. The battery is configured to provide electrical power to the electric motor to selectively drive the rotatable shaft. The battery includes a plurality of battery strings. The charger is configured to selectively direct an electrical charging current to the battery to charge the plurality of battery strings. The battery monitoring system includes a plurality of sensors. Each sensor is configured to measure a battery string voltage of a respective one of the plurality of battery strings. The battery monitoring system further includes a processor in communication with a non-transitory memory storing instructions, which instructions when executed by the processor, cause the processor to determine the battery string voltage for each battery string of the plurality of battery strings with the plurality of sensors, identify a battery string voltage hierarchy for the plurality of battery strings, the battery string voltage hierarchy ordered from a lowest battery string voltage to a highest battery string voltage, and sequentially charge the plurality of battery strings with the charger based on the battery string voltage hierarchy by charging a first battery string of the plurality of battery strings to a first target string voltage and charging the first battery string and a second battery string of the plurality of the plurality of battery strings together to a second target string voltage, the second target string voltage greater than the first target string voltage.

In any of the aspects or embodiments described above and herein, the rotational assembly may further include a propeller. The electric motor may be configured to selectively drive the propeller via the rotatable shaft.

In any of the aspects or embodiments described above and herein, the propulsion system may include a gas turbine engine. The gas turbine engine may include the rotational assembly and a generator. The generator may form the charger.

In any of the aspects or embodiments described above and herein, the gas turbine engine may include a second rotational assembly including a second rotatable shaft, a bladed turbine rotor, and a bladed compressor rotor. The second rotatable shaft may interconnect the bladed turbine rotor and the bladed compressor rotor. The bladed turbine rotor may be configured to drive the generator via the second rotatable shaft.

In any of the aspects or embodiments described above and herein, the plurality of battery strings may be electrically connected in parallel.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of a portion of an aircraft including a propulsion system, in accordance with one or more embodiments of the present disclosure.
FIG. 2 schematically illustrates a side view of an aircraft propulsion system including a gas turbine engine, in accordance with one or more embodiments of the present disclosure.
FIG. 3 schematically illustrates portion of a battery assembly including a battery string, in accordance with one or more embodiments of the present disclosure.
FIG. 4 schematically illustrates another portion of a battery assembly including a plurality of battery strings electrically connected in parallel, in accordance with one or more embodiments of the present disclosure.
FIG. 5 illustrates a block diagram depicting a method for charging a battery including a plurality of battery strings, in accordance with one or more embodiments of the present disclosure.
FIG. 6 illustrates a graph of battery string voltages for a battery charged using the method of FIG. 5, in accordance with one or more embodiments of the present disclosure.
FIG. 7 illustrates a block diagram depicting another method for charging a battery including a plurality of battery strings, in accordance with one or more embodiments of the present disclosure.
FIGS. 8A-E illustrate graphs of battery string voltages at various stages for a battery charged using the method of FIG. 7, in accordance with one or more embodiments of the present disclosure.

### DETAILED DESCRIPTION

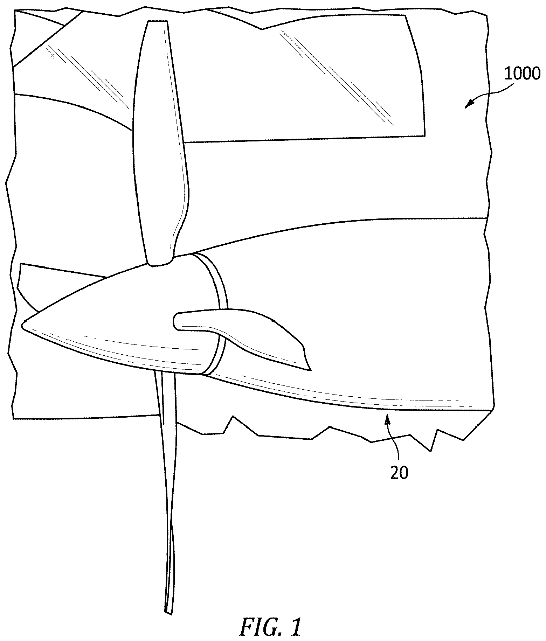

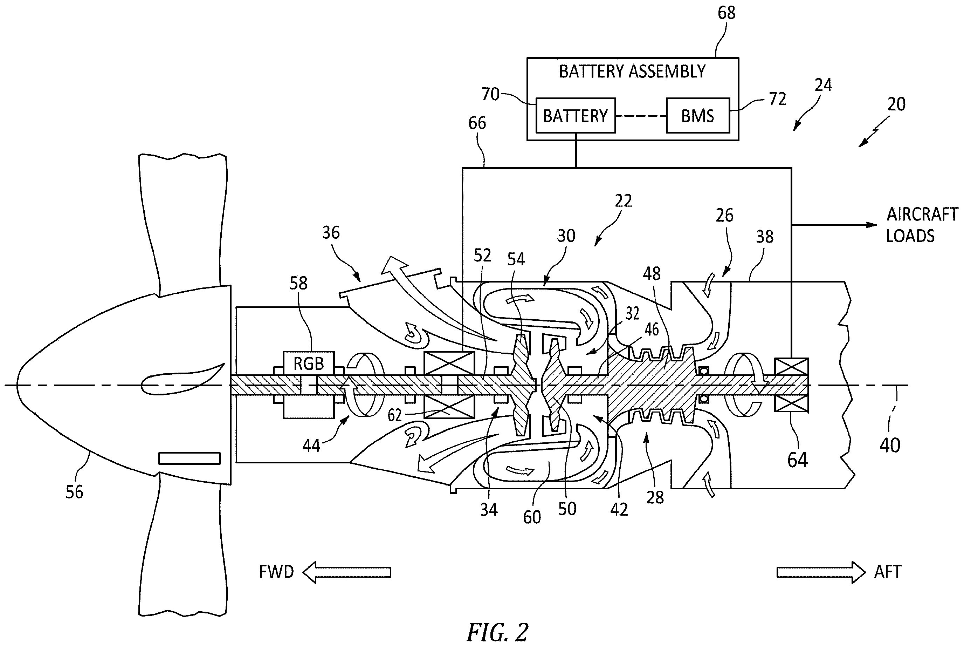

FIGS. 1 and 2 illustrate a propulsion system 20 configured for an aircraft, such as the aircraft 1000 of FIG. 1. Briefly, the aircraft may be a fixed-wing aircraft (e.g., an airplane), a rotary-wing aircraft (e.g., a helicopter), a tilt-rotor aircraft, a tilt-wing aircraft, or any other aerial vehicle. Moreover, the aircraft may be a manned aerial vehicle or an unmanned aerial vehicle (UAV, e.g., a drone). The aircraft propulsion system 20 of FIG. 2 includes a gas turbine engine 22. However, the present disclosure is also applicable to propulsion systems which do not include gas turbine engines such as, but not limited to, a battery-electric propulsion system (e.g., an electric-motor driven propeller system). The propulsion system 20 additionally includes or is otherwise electrically connected to an electrical distribution system 24.

FIG. 2 illustrates a side, cutaway view of the propulsion system 20 illustrating the gas turbine engine 22 and the electrical distribution system 24. The gas turbine engine 22 of FIG. 2 is configured as a hybrid-electric, multi-spool turboprop gas turbine engine. However, it should be understood that aspects of the present disclosure may be equally applicable to other configurations of gas turbine engines such as, but not limited to, a turboshaft gas turbine engine, a turboprop gas turbine engine, a turbojet gas turbine engine, a propfan gas turbine engine, an open rotor gas turbine engine, an auxiliary power unit (APU), or the like.

The gas turbine engine 22 of FIG. 2 includes an air inlet 26, a compressor 28, a combustor 30, a high-pressure turbine 32, a power turbine 34, an exhaust 36, and an engine static structure 38. The air inlet 26, the compressor 28, the combustor 30, the high-pressure turbine 32, the power turbine 34, and the exhaust 36 are arranged sequentially along an axial centerline 40 (e.g., a rotational axis) of the gas turbine engine 22. The engine static structure 38 may include, for example, one or more engine cases for the gas turbine engine 22. The engine static structure 38 may additionally include cowlings, bearing assemblies, and/or other structural components of the gas turbine engine 22. The one or more engine cases form, house, and/or structurally support one or more of the air inlet 26, the compressor 28, the combustor 30, the high-pressure turbine 32, the power turbine 34, and the exhaust 36.

Components of the gas turbine engine 22 of FIG. 2, such as components of the compressor 28, the high-pressure turbine 32, and the power turbine 34, are arranged as a first rotational assembly 42 (e.g., a high-pressure spool) and a second rotational assembly 44 (e.g., a power spool). The first rotational assembly 42 and the second rotational assembly 44 are mounted for rotation about the axial centerline 40 relative to the engine static structure 38. The gas turbine engine 22 of FIG. 2 has a "free turbine" configuration in which power for aircraft propulsion is extracted by the second rotational assembly 44 downstream of (e.g., from the exhaust of) the first rotational assembly 42. The present disclosure, however, is not limited to free turbine gas turbine engine configurations.

The first rotational assembly 42 includes a first shaft 46, a bladed compressor rotor 48 for the compressor 28, and a bladed turbine rotor 50 for the high-pressure turbine 32. The first shaft 46 interconnects the bladed compressor rotor 48 and the bladed turbine rotor 50. The second rotational assembly 44 includes a second shaft 52, a bladed power turbine rotor 54 for the power turbine 34, and a propeller 56. The second shaft 52 is connected to the bladed power turbine rotor 54. The second shaft 52 may be directly or indirectly connected to the propeller 56. For example, the second shaft 52 may be configured to rotatably drive the propeller 56 via a reduction gear box (RGB) 58. The second rotation assembly 44 may include additional components (e.g., a propeller input shaft) for interconnecting the second shaft 52 with the bladed power turbine rotor 54 and the propeller 56. The RGB 58 may be configured to drive the propeller 56 at a reduced rotational speed relative to the second shaft 52. Alternatively, the second shaft 52 may directly interconnect the bladed power turbine rotor 54 and the propeller 56.

During operation of the gas turbine engine 22 of FIG. 2, ambient air enters the gas turbine engine 22 through the air inlet 26 and is directed into the compressor 28. The ambient air is compressed by the bladed compressor rotor 48 and directed into a combustion chamber 60 of the combustor 30. Fuel is injected into the combustion chamber 60 and mixed with the compressed air to provide a fuel-air mixture. This fuel-air mixture is ignited, and combustion products thereof flow through and sequentially cause the bladed turbine rotor 50 and the bladed power turbine rotor 54 to rotate. The rotation of the bladed turbine rotor 50 and the bladed power turbine rotor 54 respectively drive rotation of the first rotational assembly 42 and the second rotational assembly 44. Rotation of the second rotational assembly 44 further drives rotation of the propeller 56 to provide propulsion (e.g., thrust) for the propulsion system 20 and the aircraft 1000 (see FIG. 1). Combustion exhaust gas flowing past the bladed power turbine rotor 54 along is directed out of the gas turbine engine 22 through the exhaust 36.

The electrical distribution system 24 of FIG. 2 is configured to supply electrical power for electrical loads of the propulsion system 20 and/or the aircraft 1000 (see FIG. 1). Examples of electrical loads for the aircraft 1000 include, but are not limited to, electronic control systems, environmental control systems, electric motors, lighting systems, communication systems, and the like. The electrical distribution system 24 of FIG. 2 includes an electric motor 62, a generator 64, an electrical distribution bus 66, and a battery assembly 68. The present disclosure, however, is not limited to the particular configuration of the electrical distribution system 24 of FIG. 2.

The electric motor 62 is configured to apply a rotational force to second rotational assembly 44. For example, the electric motor 62 may be directly or indirectly coupled to the second shaft 52 to drive the second shaft 52 by applying a rotational force to the second shaft 52. The electric motor 62 may further include a clutch configured to selectively couple the electric motor 62 to the second shaft 52 or to an intermediate component of the second rotational assembly 44. Accordingly, the electric motor 62 may be configured to apply a rotational force to the second rotational assembly 44 to facilitate rotation of the propeller 56 by the second rotational assembly 44. For example, the electric motor 62 in combination with the bladed power turbine rotor 54 may provide the rotational force for driving the propeller 56. The electric motor 62 may be selected to be sufficiently powerful to drive the propeller 56 during all flight conditions independent of the bladed power turbine rotor 54. Accordingly, the electric motor 62 may provide all of the rotational force for driving the propeller 56. The electric motor 62 is electrically connected to the electrical distribution bus 66 and configured to receive electrical power from the electrical distribution bus 66 for operation of the electric motor 62.

The generator 64 is configured to supply electrical power to the electrical distribution system 24. The generator 64 of FIG. 2 is operably coupled to the first shaft 46. For example, the generator 64 may be operably coupled to the first shaft 46 by an accessory gear box (not shown) or other speed-reducing gear assembly. The first shaft 46 drives rotation of the generator 64 to generate electrical power for the electrical distribution system 24. The generator 64 is connected in electrical communication with the electrical distribution bus 66 to supply electrical power to the electrical distribution bus 66 for electrical loads of the propulsion system 20 and/or the aircraft 1000 (see FIG. 1). The present disclosure is not limited to the particular generator 64 configuration of FIG. 2. For example, the generator 64 may alternatively be operably coupled to and driven by the second shaft 52. Moreover, electrical power for the electrical distribution system 24 may additionally or alternatively be provided by other electrical power sources which are independent of the propulsion system 20 such as, but not limited to, a generator of another propulsion system (e.g., for multi-propulsion-system aircraft), an auxiliary power unit (APU), a fuel cell (e.g., hydrogen fuel cell) assembly, or another power source disposed on the aircraft 1000 or otherwise outside of the propulsion system 20, and/or a ground-based power supply (e.g., an airport electrical distribution system, generator, or other electrical power supply or battery charging device) external to the aircraft 1000.

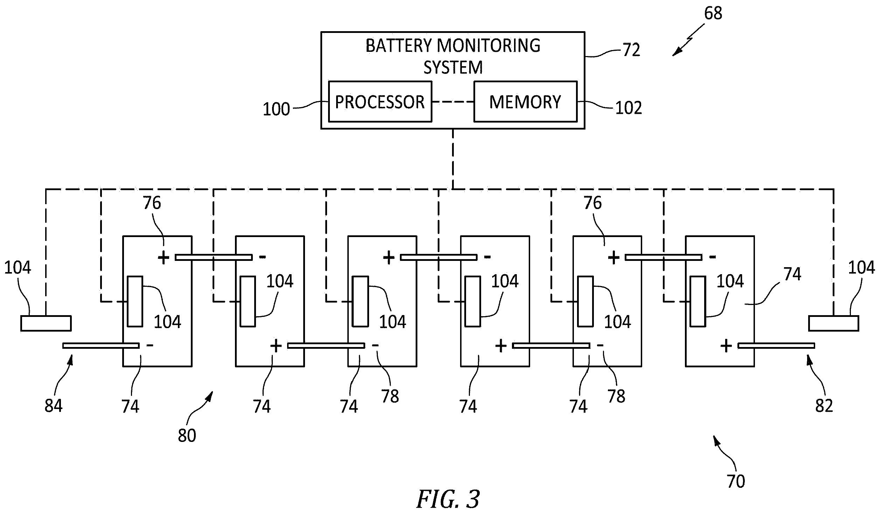

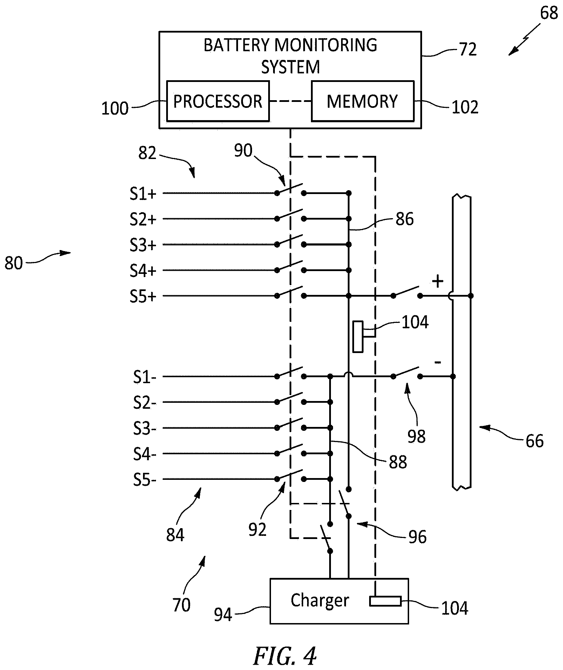

Referring to FIGS. 3 and 4, the battery assembly 68 includes a battery 70 and a battery monitoring system (BMS) 72. The battery 70 is configured to selectively supply electrical power to the electrical distribution bus 66 independently (e.g., as a single power source for the electrical distribution bus 66) or in combination with the generator 64 and/or other power sources. The battery 70 may be disposed, for example, in the aircraft 1000 and/or its propulsion systems 20. The battery 70 of FIG. 3 includes a plurality of battery modules 74 (e.g., battery packs). Each battery module 74 may include a plurality of discrete battery cells electrically connected together (e.g., using series and/or parallel electrical connections) to form the battery module 74. The present disclosure, however, is not limited to this particular configuration of the battery modules 74. The battery modules 74 (e.g., and their battery cells) are configured as rechargeable batteries having battery chemistries such as, but not limited to, lead acid, nickel cadmium (NiCd), nickel-metal hydride (Ni-MH), lithium-ion (Li-ion), lithium-polymer (Li-poly), lithium metal, and the like. Each battery module 74 includes a positive electrode 76 (e.g., an anode) and a negative electrode 78 (e.g., a cathode).

FIG. 3 schematically illustrates a group of the battery modules 74 electrically connected in series to form a battery string 80 of the battery 70. For example, each battery module 74 of the battery string 80 of FIG. 3 is electrically connected in series (e.g., positive to negative or negative to positive) to one or more other battery modules 74 of the battery string 80 of FIG. 3. The battery string 80 includes a positive string terminal 82 and a negative string terminal 84 for connecting the battery string 80 in electrical communication with other portions of the battery 70. The battery string 80 of FIG. 3 includes six (6) battery modules 74 electrically connected in series. The present disclosure, however, is not limited to any particular number of battery modules 74 for the battery string 80. Moreover, the battery modules 74 of the battery string 80 may be electrically connected together using series and/or parallel electrical connections as necessary to configure the battery string 80 with the desired electrical characteristics (e.g., voltage output, power output, etc.) for the battery string 80.

FIG. 4 schematically illustrates a portion of the battery assembly 68 in which the battery 70 includes a plurality of the battery strings 80. The plurality of battery strings 80 of FIG. 4 includes five (5) battery strings S1-5 electrically connected together in parallel. For example, the positive string terminals 82 (e.g., S1+, S2+, S3+, S4+, S5+) of the battery strings 80 of FIG. 4 are electrically connected together at a positive battery terminal 86 and the negative string terminals 84 (e.g., S1-, S2-, S3-, S4-, S5-) are electrically connected together at a negative battery terminal 88.

Each battery string 80 of FIG. 4 includes a positive string contactor 90 and a negative string contactor 92. The positive string contactor 90 for each battery string 80 is disposed at (e.g., on, adjacent, or proximate) the respective positive string terminal 82 or otherwise electrically between the respective positive string terminal 82 and the positive battery terminal 86. The positive string contactor 90 is selectively positionable in a closed position or an open position. In the closed position, the positive string contactor 90 is configured to convey electrical current between the positive battery terminal 86 and the respective positive string terminal 82. In the open position, the positive string contactor 90 is configured to interrupt (e.g., obstruct, prevent, etc.) electrical current between the positive battery terminal 86 and the respective positive string terminal 82. The negative string contactor 92 for each battery string 80 is disposed at (e.g., on, adjacent, or proximate) the respective negative string terminal 84 or otherwise electrically between the respective negative string terminal 84 and the negative battery terminal 88. The negative string contactor 92 is selectively positionable in a closed position or an open position. In the closed position, the negative string contactor 92 is configured to convey electrical current between the negative battery terminal 88 and the respective negative string terminal 84. In the open position, the negative string contactor 92 is configured to interrupt (e.g., obstruct, prevent, etc.) electrical current between the negative battery terminal 88 and the respective negative string terminal 84. Accordingly, the positive string contactor 90 and the negative string contactor 92 may be controlled to selectively electrically connect or selectively electrically disconnect the respective battery string 80 from the battery terminals 86, 88 and/or the electrical distribution bus 66. The positive string contactor 90 and the negative string contactor 92 may be configured as electrically-controlled relays or switches which may be controlled by an electrical control signal to position the respective positive string contactor 90 and negative string contactor 92 in the closed position or the open position. While each battery string 80 of FIG. 4 includes both the positive string contactor 90 and the negative string contactor 92, the present disclosure is not limited to the use of both the positive string contactor 90 and the negative string contactor 92 for the battery string 80 (e.g., the battery string 80 may include the positive string contactor 90 or the negative string contactor 92). Of course, the battery 70 may alternatively include other selective electrical power interruption devices such as, but not limited to electrical circuit breakers or electrical switches.

The battery 70 of FIG. 4 further includes a charger 94, main charger contactors 96, and main battery contactors 98. The charger 94 is an electrical power source configured to supply electrical power to the battery terminals 86, 88 for charging one or more of the battery strings 80 (e.g., the battery strings S1, S2, S3, S4, and/or S5 of FIG. 4). The charger 94 may be formed by or may otherwise include one or more electrical power sources such as, but not limited to, the generator 64, a generator of another propulsion system (e.g., for multi-propulsion-system aircraft), an auxiliary power unit (APU), a fuel cell (e.g., hydrogen fuel cell) assembly, or another power source disposed on the aircraft 1000 or otherwise outside of the propulsion system 20, and/or a ground-based power supply (e.g., an airport electrical distribution system, generator, or other electrical power supply or battery charging device) external to the aircraft 1000. The main charger contactors 96 are configured to selectively connect the charger 94 in electrical communication with the battery 70 (e.g., with the positive battery terminal 86 and the negative battery terminal 88). The main battery contactors 98 are configured to selectively connect the electrical distribution bus 66 in electrical communication with the battery 70 (e.g., with the positive battery terminal 86 and the negative battery terminal 88). Each of the main charger contactors 96 and the main battery contactors 98 is selectively positionable in a closed position or an open position. In the closed position, each of the main charger contactors 96 and the main battery contactors 98 is configured to convey electrical current. In the open position, each of the main charger contactors 96 and the main battery contactors 98 is configured to interrupt (e.g., obstruct, prevent, etc.) electrical current. The main charger contactors 96 and the main battery contactors 98 may be configured as electrically-controlled relays or switches which may be controlled by an electrical control signal to position the main charger contactors 96 and the main battery contactors 98 in their respective closed position or open position.

The battery monitoring system 72 of FIGS. 2-4 includes a processor 100 and memory 102. The memory 102 is in signal communication with the processor 100. The processor 100 may include any type of computing device, computational circuit, or any type of process or processing circuit capable of executing a series of instructions that are stored in the memory 102, thereby causing the processor 100 to perform or control one or more steps or other processes. The processor 100 may include multiple processors and/or multicore CPUs and may include any type of processor, such as a microprocessor, digital signal processor, co-processors, a microcontroller, a microcomputer, a central processing unit, a field programmable gate array, a programmable logic device, a state machine, logic circuitry, analog circuitry, digital circuitry, etc., and any combination thereof. The instructions stored in memory 102 may represent one or more algorithms for controlling and/or monitoring aspects of the battery assembly 68, and the stored instructions are not limited to any particular form (e.g., program files, system data, buffers, drivers, utilities, system programs, etc.) provided they can be executed by the processor 100. The memory 102 may be a non-transitory computer readable storage medium configured to store instructions that when executed by one or more processors, cause the one or more processors to perform or cause the performance of certain functions. The memory 102 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the battery monitoring system 72 may be achieved via the use of hardware, software, firmware, or any combination thereof. The battery monitoring system 72 may also include input and output devices (e.g., keyboards, buttons, switches, touch screens, video monitors, sensor readouts, data ports, etc.) that enable the operator to input instructions, receive data, etc.

The battery monitoring system 72 includes a plurality of sensors 104 to monitor operational parameters of the battery 70 including, but not limited to, voltage, current, and temperature. For example, the battery monitoring system 72 may include one or more of the sensors 104 at (e.g., on, adjacent, or proximate) each battery module 74 to monitor the health of each battery module 74 and or to monitor operational parameters of each battery module 74 such as, but not limited to, voltage, current, and temperature. The battery monitoring system 72 may additionally include one or more sensors 104 for monitoring voltage and current parameters for each battery string 80, for the battery 70 (e.g., at the battery terminals 86, 88), and/or for the charger 94.

The battery monitoring system 72 may be connected in electrical and/or electronic communication with the string contactors 90, 92. The battery monitoring system 72 may control the string contactors 90, 92 for positioning in their respective open positions or closed positions using a control signal (e.g., a control current, electronic signal, etc.). Similarly, the battery monitoring system 72 may be connected in electrical and/or electronic communication with the main charger contactors 96 and/or the main battery contactors 98 to control the main charger contactors 96 and/or the main battery contactors 98 in their respective open positions or closed positions. Alternatively, the main battery contactors 98 may be controlled independent of the battery monitoring system 72, for example, manually (e.g., by a pilot or other operator) or by another control system of the propulsion system 20 or the aircraft (see FIG. 1).

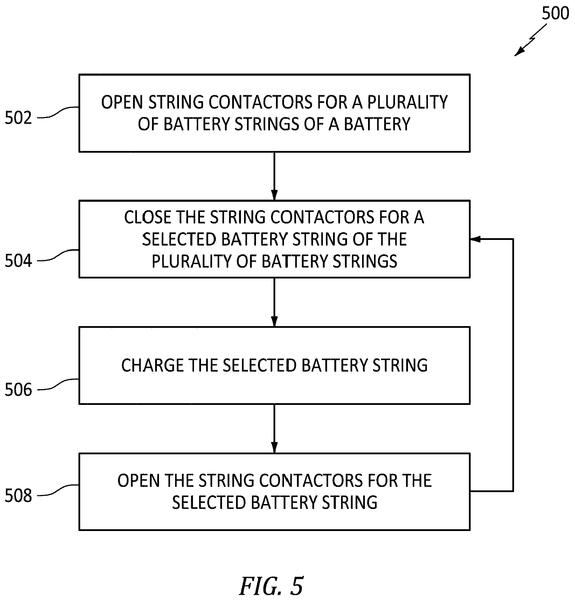

Referring to FIGS. 4-6, a Method 500 for charging a battery including a plurality of battery strings (e.g., a plurality of battery strings electrically connected in parallel) is provided. FIG. 5 illustrates a flowchart for the Method 500. The Method 500 may be performed for the battery assembly 68, as described herein. The battery monitoring system 72 may be used to execute or control one or more steps of the Method 500 for the battery 70. For example, the processor 100 may execute instructions stored in memory 102, thereby causing the battery monitoring system 72 and/or its processor 100 to execute or otherwise control one or more steps of the Method 500. However, it should be understood that the Method 500 is not limited to use with the battery assembly 68 described herein. Unless otherwise noted herein, it should be understood that the steps of Method 500 are not required to be performed in the specific sequence in which they are discussed below and, in some embodiments, the steps of Method 500 may be performed separately or simultaneously.

Step 502 includes opening (e.g., as controlled by the battery monitoring system 72) the string contactors 90, 92 for each battery string 80 of the plurality of battery strings 80. For example, Step 502 may include opening the string contactors 90, 92 for all of the battery strings 80 of the battery 70.

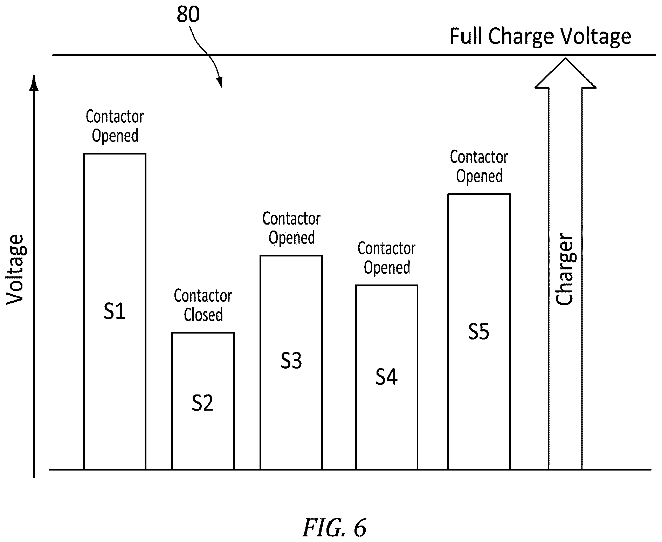

Step 504 includes closing (e.g., as controlled by the battery monitoring system 72) the string contactors 90, 92 for a selected battery string 80, which selected battery string 80 is one of the plurality of battery strings 80. The selected battery string 80 may be any battery string 80 of the plurality of battery strings 80 which is identified by the battery monitoring system 72 as having a battery string voltage V_{STRING} which is less than a full charging voltage or another target string voltage V_{TARGET} for the battery string 80. FIG. 6 graphically illustrates the battery string voltages V_{STRING} for each of the battery strings 80 of FIG. 4 including the battery strings S1, S2, S3, S4, and S5. As illustrated in FIG. 6, the battery string S2 is the selected battery string 80 and the string contactors 90, 92 for the battery string S2 have been closed to allow the battery string S2 to receive a charging current from the charger 94.

Step 506 includes charging the selected battery string 80 (e.g., only the selected battery string 80) to a target string voltage V_{TARGET} using the charger 94. Electrical charging current from the charger 94 is directed to the selected battery string 80 to charge the selected battery string 80. As the selected battery string 80 receives the charging current from the charger 94, the battery string voltage V_{STRING} of the selected battery string 80 will increase. The charging current from the charger 94 may be constant or substantially constant for most of the charging of the selected battery string 80. The charging current from the charger 94 may be reduced as the battery string voltage V_{STRING} increases to near a full charge voltage for the selected battery string 80. The battery monitoring system 72 may monitor the battery string voltage V_{STRING} of the selected battery string 80 to continue charging the selected battery string 80 until the battery string voltage V_{STRING} increases to the target string voltage V_{TARGET}.

Step 508 includes opening (e.g., as controlled by the battery monitoring system 72) the string contactors 90, 92 for the selected battery string 80. The string contactors 90, 92 for the selected battery string 80 may be opened by the battery monitoring system 72 when the battery monitoring system 72 identifies that charging of the selected battery string 80 is complete (e.g., selected battery string voltage V_{STRING} is above, at, or within a threshold tolerance of the target string voltage V_{TARGET}).

Steps 504, 506, and 508 may be repeated for each other battery string 80 of the plurality of battery strings 80. For example, Steps 504, 506, and 508 may be repeated until all of the battery strings 80 of the battery 70 have been charged.

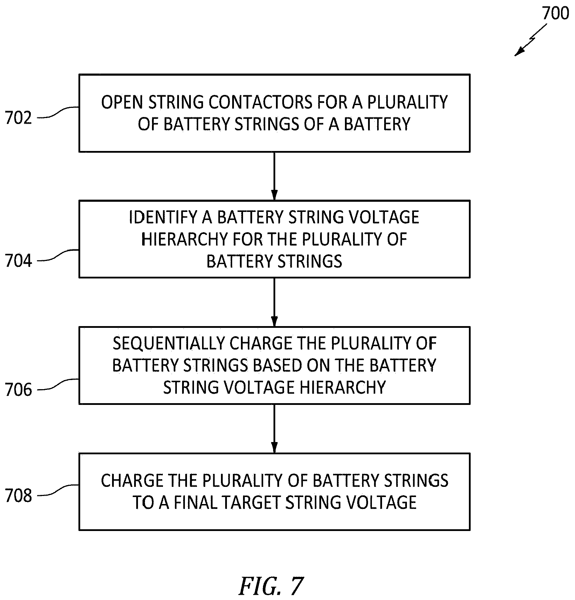

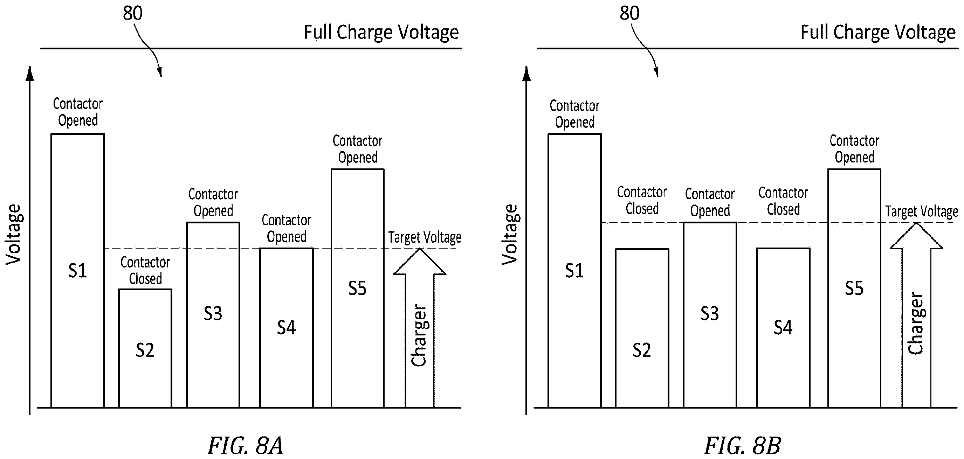

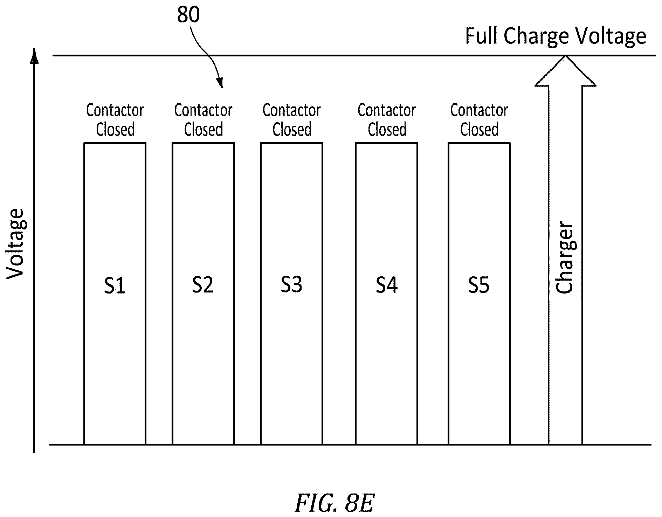

Referring to FIGS. 4, 7, and 8A-E, another Method 700 for charging a battery including a plurality of battery strings (e.g., a plurality of battery strings electrically connected in parallel) is provided. FIG. 7 illustrates a flowchart for the Method 700. FIGS. 8A-E illustrate graphs of battery string voltages V_{STRING} of the plurality of battery strings 80 at various stages for a battery charged using the Method 700. The Method 700 may be performed for the battery assembly 68, as described herein. The battery monitoring system 72 may be used to execute or control one or more steps of the Method 700 for the battery 70. For example, the processor 100 may execute instructions stored in memory 102, thereby causing the battery monitoring system 72 and/or its processor 100 to execute or otherwise control one or more steps of the Method 700. However, it should be understood that the Method 700 is not limited to use with the battery assembly 68 described herein. Unless otherwise noted herein, it should be understood that the steps of Method 700 are not required to be performed in the specific sequence in which they are discussed below and, in some embodiments, the steps of Method 700 may be performed separately or simultaneously.

Step 702 includes opening (e.g., as controlled by the battery monitoring system 72) the string contactors 90, 92 for each battery string 80 of the plurality of battery strings 80. For example, Step 502 may include opening the string contactors 90, 92 for all of the battery strings 80 of the battery 70.

Step 704 includes identifying a battery string voltage V_{STRING} hierarchy for the plurality of battery strings 80. Step 704 may first include determining or otherwise obtaining, with the battery monitoring system 72 (e.g., the sensors 104), the battery strong voltage V_{STRING} for each battery string 80 of the plurality of battery strings 80. The battery monitoring system 72 may then identify the battery string voltage V_{STRING} hierarchy for the plurality of battery strings 80 by identifying the plurality of strings 80 in order from the lowest battery string voltage V_{STRING} to the highest battery string voltage V_{STRING}. The battery monitoring system 72 may identify a first battery string 80 of the plurality of battery strings 80, which first battery string 80 has a battery string voltage V_{STRING} which is lowest battery string voltage V_{STRING} for all of the battery strings 80 of the plurality of battery strings 80. The battery monitoring system 72 may then identify a second battery string 80 of the plurality of battery strings 80, which second battery string 80 has a battery string voltage V_{STRING} which is the second lowest battery string voltage V_{STRING} for all of the battery strings 80 of the plurality of battery strings 80. The battery monitoring system 72 may continue to identify each battery string 80 of the plurality of battery strings 80 based on the battery string voltage V_{STRING} of each battery string 80 relative to the battery string voltage V_{STRING} of each other battery string 80 of the plurality of battery strings 80. For example, FIG. 8A illustrates battery string voltages V_{STRING} for the plurality of battery strings 80 of FIG. 4 (e.g., battery strings S1-5). As shown in FIG. 8A, the battery string S2 has the lowest battery string voltage V_{STRING} for the plurality of battery strings 80 of FIG. 8A, and may be understood as the first battery string S2 (e.g., a "lowest-voltage battery string"). The battery strings S3-5 of FIG. 8A may be understood as the second battery string S4, the third battery string S3, and the fourth battery string S5 (e.g., one or more "intermediate-voltage battery strings"). The battery string S1 of FIG. 8A may be understood as the fifth battery string S1 (e.g., the "highest-voltage battery string"). The first through fifth battery strings are ordered in the battery string voltage V_{STRING} hierarchy from lowest to highest battery string voltage V_{STRING}, where the second battery string is immediately after the first battery string in the battery string voltage V_{STRING} hierarchy, the third battery string is immediately after the second battery string in the battery string voltage V_{STRING} hierarchy, and so on.

Step 706 includes sequentially charging the plurality of battery strings 80. One or more selected battery strings 80 of the plurality of battery strings 80 may be charged (e.g., as controlled by the battery monitoring system 72) by closing (e.g., if open) the string contactors 90, 92 for the respective selected battery strings 80, closing (e.g., if open) the main charger contactors 96, 98 for the charger 94, and directing an electrical charging current from the charger 94 to the selected battery strings 80. The plurality of battery strings 80 are sequentially charged based on the identified battery string voltage V_{STRING} hierarchy (see Step 704). For example, as illustrated in FIGS. 8A-E, the plurality of battery strings 80 are charged in a series of sequential charging phases based on the identified battery string voltage V_{STRING} hierarchy.

As shown in FIG. 8A, sequentially charging the plurality of battery strings 80 may first include charging the first battery string S2 (e.g., the lowest-voltage battery string) by closing the string contactors 90, 92 for the first battery string S2 and directing the electrical charging current from the charger 94 to the first battery string S2. In this condition, the string contactors 90, 92 for each other battery string S1, S3-5 may be open such that only the first battery string S2 may be charged. The first battery string S2 is charged to a first target string voltage V_{TARGET} which is equal to or greater than the battery string voltage V_{STRING} of the next highest-voltage battery string 80 in the battery string voltage V_{STRING} hierarchy, which next highest-voltage battery string 80 in FIG. 8A is the second battery string S4. For example, the first target string voltage V_{TARGET} may be within a voltage tolerance (e.g., a dynamically determined or predetermined voltage tolerance) of the battery string voltage V_{STRING} of the next highest-voltage battery string 80. Charging the first battery string S2 to a target string voltage V_{TARGET} just above the battery string voltage V_{STRING} of the next highest-voltage battery string 80 (e.g., within the determined voltage tolerance) may minimize the difference in the open-circuit voltages of the battery strings 80 (e.g., the first battery string S2 and the next highest-voltage battery string S4), thereby reducing the likelihood of damaged electrical equipment (e.g., contactors) or electrical arcs when the battery strings 80 are electrically connected in parallel. Routine experimentation may be performed by a person of ordinary skill in the art to determine a suitable voltage tolerance for charging the battery strings 80 in accordance with and as informed by one or more aspects of the present disclosure. As an example, the voltage tolerance may be a voltage range between and to 95% and 105% of a voltage of the next highest-voltage battery string 80. The present disclosure, however, is not limited to the foregoing exemplary voltage tolerance range. In other words, the first battery string S2 is charged to the battery string voltage V_{STRING} of the battery string 80 which is immediately after the first battery string S2 in the battery string voltage V_{STRING} hierarchy. The first battery string S2 is charged by directing the electrical charging current to the first battery string S2 at a charging current value. The charging current from the charger 94 may be constant or substantially constant for most of the charging of the selected battery string 80. The charging current from the charger 94 may be reduced as the battery string voltage V_{STRING} increases to near a full charge voltage for the selected battery string 80.

As shown in FIG. 8B, the string contactors 90, 92 for the second battery string S4 may be shut and the first battery string S2 and the second battery string S4 may be charged. In this condition, the string contactors 90, 92 for each other battery string S1, S3, S5 may be open such that only the first battery string S2 and the second battery string S4 may be charged. The first battery string S2 and the second battery string S4 may be charged together to a second target string voltage V_{TARGET} which is equal to or greater than (e.g., within a determined voltage tolerance, as previously discussed) the battery string voltage V_{STRING} of the next highest-voltage battery string 80 in the battery string voltage V_{STRING} hierarchy, which next highest-voltage battery string 80 in FIG. 8B is the third battery string S3. In other words, the first battery string S2 and the second battery string S4 are charged to or above (e.g., just above) the battery string voltage V_{STRING} of the battery string 80 which is immediately after the second battery string S4 in the battery string voltage V_{STRING} hierarchy. The second battery string S2 and the second battery string S4 are charged by directing the electrical charging current to the first battery string S2 at a value of the charging current value which is multiplied by the number of the battery strings 80 being charged (e.g., the total charging current value directed from the charger 94 for charging the first battery string S2 and the second battery string S4 is twice the charging current value directed from the charger 94 for charging the first battery string S2 alone).

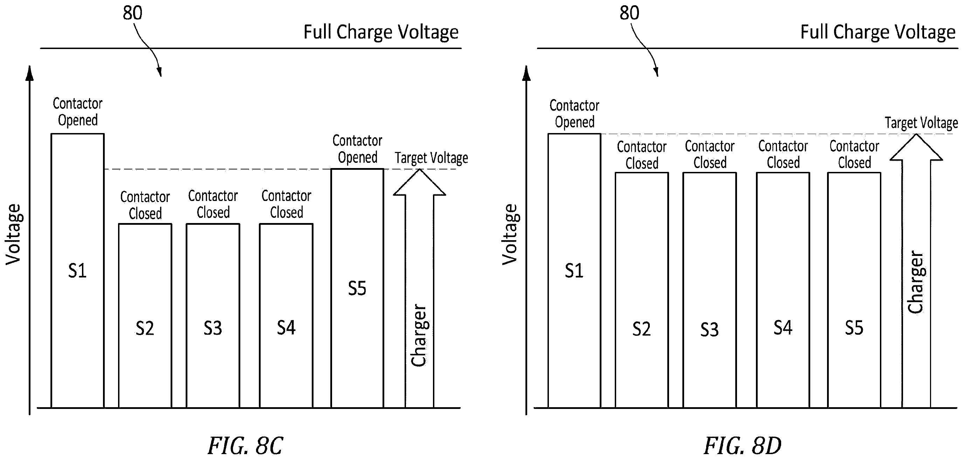

As shown in FIGS. 8C and 8D, a sequentially increasing subset of the plurality of battery strings 80 is charged, as described above. For example, in FIG. 8C, the battery strings S2-4 are charged to or above the battery string voltage V_{STRING} of the next highest-voltage battery string 80 in the battery string voltage V_{STRING} hierarchy, which next highest-voltage battery string 80 in FIG. 8C is the fourth battery string S5. For further example, in FIG. 8D, the battery strings S2-5 are charged to or above the battery string voltage V_{STRING} of the next highest-voltage battery string 80 in the battery string voltage V_{STRING} hierarchy, which next highest-voltage battery string 80 in FIG. 8D is the fifth battery string S1 (e.g., the highest-voltage battery string). In each sequential charging phase, the electrical charging current may be a multiple of the charging current value based on the number of battery strings 80 being charged. Once the subset of the plurality of battery strings 80 has been charged to the battery string voltage V_{STRING} of the highest-voltage battery string (e.g., the battery string S1), the battery string voltages V_{STRING} for each battery string 80 of the plurality of battery strings 80 may be the same or substantially the same. The sequential charging process of Step 706 facilitates more rapid charging for batteries having multiple battery strings connected in parallel by allowing a greater number of the battery strings to be charged at one time (e.g., compared to the Method 500). Moreover, this sequential charging process may more rapidly charge battery strings of a battery to greater than the minimum operational voltage for each battery string, thereby maximizing the number of battery strings which may be available for use during aircraft maneuvers requiring battery energy (e.g., for greater propulsion system thrust).

Step 708 may include charging each battery string 80 of the plurality of battery strings 80 to a final target string voltage V_{FINAL}. The final target string voltage V_{FINAL} may be greater than the battery string voltage V_{STRING} of the highest-voltage battery string (e.g., the battery string S1). For example, the final target string voltage V_{FINAL} may be a maximum charging voltage or near a maximum charging voltage for the plurality of battery strings 80. Step 708 may be performed to charge each battery string 80 together to the final target string voltage V_{FINAL} subsequent to charging the subset of the of the plurality of battery strings 80 to the battery string voltage V_{STRING} of the highest-voltage battery string (e.g., the battery string S1).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly for an aircraft, the assembly comprising:
a battery (70) including a plurality of battery strings (80);
a charger (94) configured to selectively direct an electrical charging current to the battery (70) to charge the plurality of battery strings (80); and
a battery monitoring system (72) including a plurality of sensors (104), each sensor configured to measure a battery string voltage of a respective one of the plurality of battery strings (80), the battery monitoring system (72) further including a processor (100) in communication with a non-transitory memory (102) storing instructions, which instructions when executed by the processor (100), cause the processor (100) to:
determine the battery string voltage for each battery string of the plurality of battery strings (80) with the plurality of sensors (104);
identify a battery string voltage hierarchy for the plurality of battery strings (80), the battery string voltage hierarchy identifying at least a lowest-voltage battery string (S2) of the plurality of battery strings (80), at least one intermediate-voltage battery string (S3-S5) of the plurality of battery strings (80), and a highest-voltage battery string (S1) of the plurality of battery strings (80); and
sequentially charge the plurality of battery strings (80) with the charger (94) based on the battery string voltage hierarchy by:
charging the lowest-voltage battery string (S2) to a first target string voltage; and
charging the lowest-voltage battery string (S2) and the at least one intermediate-voltage battery string (S3-S5) together to a second target string voltage, the second target string voltage greater than the first target string voltage.

2. The assembly of claim 1, wherein the first target string voltage is greater than the battery string voltage of the intermediate-voltage battery string (S3-S5) and the first target string voltage is within a first voltage tolerance of the battery string voltage of the intermediate-voltage battery string (S3-S5).

3. The assembly of claim 1 or 2, wherein the second target string voltage is greater than the battery string voltage of the highest-voltage battery string (S1) and the second target string voltage is within a second voltage tolerance of the battery string voltage of the highest-voltage battery string (S1).

4. The assembly of claim 1, 2 or 3, wherein the instructions, when executed by the processor (100), further cause the processor (100) to charge the lowest-voltage battery string (S2), the intermediate-voltage battery string (S3-S5), and the highest-voltage battery string (S1) together to a final target string voltage, subsequent to charging the lowest-voltage battery string (S2) and the at least one intermediate-voltage battery string (S3-S5) together to the second target string voltage, the final target string voltage greater than the second target string voltage.

5. The assembly of any preceding claim, wherein the at least one intermediate-voltage battery string (S3-S5) includes a plurality of intermediate-voltage battery strings.

6. The assembly of claim 5, wherein the second target string voltage greater than or equal to the battery string voltage of one intermediate-voltage battery string (S4) of the plurality of intermediate voltage battery strings (S3-S5).

7. The assembly of any preceding claim, wherein:
charging the lowest-voltage battery string (S2) to the first target string voltage includes charging only the lowest-voltage battery string (S2) to the first target string voltage; and
charging the lowest-voltage battery string (S2) and the at least one intermediate-voltage battery string (S3-S5) to the second target string voltage includes charging only the lowest-voltage battery string (S2) and the at least one intermediate-voltage battery string (S3-S5) to the second target string voltage.

8. The assembly of any preceding claim, wherein the instructions, when executed by the processor (100), further cause the processor (100) to:
charge the lowest-voltage battery string (S2) to the first target string voltage at a charging current value of the electrical charging current; and
charge two or more of the plurality of battery strings (80) at the charging current value multiplied by a number of the two or more of the plurality of battery strings (80) being charged.

9. The assembly of any preceding claim, further comprising an aircraft propulsion system gas turbine engine (22), the aircraft propulsion system gas turbine engine (22) including a generator (64) forming the charger (94).

10. A method for charging a battery (70) for an aircraft, the battery (70) including a plurality of battery strings (80) electrically connected in parallel, the method comprising:
determining a battery string voltage for each battery string of the plurality of battery strings (80);
identifying a battery string voltage hierarchy for the plurality of battery strings (80), the battery string voltage hierarchy ordered from a lowest battery string voltage to a highest battery string voltage; and
sequentially charging the plurality of battery strings (80) based on the battery string voltage hierarchy by:
charging a first battery string (S2) of the plurality of battery strings (80) to a first target string voltage;
charging the first battery string (S2) and a second battery string (S4) of the plurality of the plurality of battery strings (80) together to a second target string voltage, the second target string voltage greater than the first target string voltage; and
charging the plurality of battery strings (80) together to a final target string voltage, the final target string voltage greater than the second target string voltage.

11. The method of claim 10, wherein the first target string voltage is within a first voltage tolerance of the battery string voltage of the second battery string (S4),
wherein, optionally, the second target string voltage is within a second voltage tolerance of the battery string voltage of a third battery string (S3) of the plurality of battery strings (80),
wherein, further optionally, the third battery string (S3) is immediately after the second battery string (S4) in the battery string voltage hierarchy.

12. The method of claim 10 or 11, further comprising opening contactors (90, 92) for each battery string of the plurality of battery strings (80) prior to charging the first battery string (S2) to the first target string voltage.

13. An assembly for an aircraft, the assembly including:
an aircraft propulsion system (20) including a rotational assembly (44), the rotational assembly (44) including a rotatable shaft (52) and an electric motor (62), the electric motor (62) configured to selectively drive the rotatable shaft (44);
a battery (70) configured to provide electrical power to the electric motor (62) to selectively drive the rotatable shaft (44), the battery (70) including a plurality of battery strings (80);
a charger (94) configured to selectively direct an electrical charging current to the battery (70) to charge the plurality of battery strings (80); and
a battery monitoring system (72) including a plurality of sensors (104), each sensor configured to measure a battery string voltage of a respective one of the plurality of battery strings (80), the battery monitoring system (72) further including a processor (100) in communication with a non-transitory memory (102) storing instructions, which instructions when executed by the processor (100), cause the processor (100) to:
determine the battery string voltage for each battery string of the plurality of battery strings (80) with the plurality of sensors (104);
identify a battery string voltage hierarchy for the plurality of battery strings (80), the battery string voltage hierarchy ordered from a lowest battery string voltage to a highest battery string voltage; and
sequentially charge the plurality of battery strings (80) with the charger (94) based on the battery string voltage hierarchy by:
charging a first battery string (S2) of the plurality of battery strings (80) to a first target string voltage;
charging the first battery string (S2) and a second battery string (S4) of the plurality of the plurality of battery strings (80) together to a second target string voltage, the second target string voltage greater than the first target string voltage.

14. The assembly of claim 13, wherein:
the rotational assembly (44) further includes a propeller (56), the electric motor (62) configured to selectively drive the propeller (56) via the rotatable shaft (44); and/or
the propulsion system (20) includes a gas turbine engine (22), the gas turbine engine (22) including the rotational assembly (44) and a generator (64), the generator (64) forming the charger (94), wherein, optionally, the gas turbine engine (22) includes a second rotational assembly (42) including a second rotatable shaft (46), a bladed turbine rotor (50), and a bladed compressor rotor (48), the second rotatable shaft (46) interconnecting the bladed turbine rotor (50) and the bladed compressor rotor (48), the bladed turbine rotor (50) configured to drive the generator (64) via the second rotatable shaft (46).

15. The assembly of any of claims 1 to 9, 13 or 14, wherein the plurality of battery strings (80) are electrically connected in parallel.
